# EUROPÄISCHE PATENTSCHRIFT

(11) **EP 3 047 560 B1**
(45) Veröffentlichungstag und Bekanntmachung des Hinweises auf die Patenterteilung: **04.10.2017**
(21) Anmeldenummer: 14742507.8
(22) Anmeldetag: 23.07.2014
(51) Int. Cl.: H02K 1/27, H02K 15/02, H02K 15/03

(54) **ROTOR FÜR EINE ELEKTRISCHE MASCHINE**
ROTOR FOR AN ELECTRIC MOTOR
ROTOR POUR UNE MACHINE ÉLECTRIQUE

(30) Priorität: 16.09.2013 DE 102013218490
(43) Veröffentlichungstag der Anmeldung: 27.07.2016
(73) Patentinhaber: Mahle International GmbH, 70376 Stuttgart (DE)
(72) Erfinder: FRITZ, Oliver, 72631 Aichtal (DE); HELMIS, Martin, 50825 Köln (DE); KELLER, Thomas, 73734 Esslingen (DE); NEUBAUER, Andreas, 71554 Weissach i.T. (DE); WEBER, Stephan, 70469 Stuttgart (DE); ELSÄSSER, Alfred, 75210 Keltern (DE); KRAPPEL, Michael, 70378 Stuttgart (DE); RIEMAY, Thomas, 71404 Korb (DE); WIESKE, Peter, 70825 Korntal-Münchingen (DE); STAUDENMANN, Christian, 3152 Mamis (CH)
(74) Vertreter: BRP Renaud & Partner mbB Rechtsanwälte Patentanwälte Steuerberater
(86) Internationale Anmeldenummer: PCT/EP2014/065835
(87) Internationale Veröffentlichungsnummer: WO 2015/036155

(56) Entgegenhaltungen:
- WO-A1-83/00956
- DE-A1-102009 045 101
- DE-C1- 10 100 717
- JP-A- S53 100 415
- US-A- 4 336 649
- US-A1- 2010 171 385

## Beschreibung

Die Erfindung betrifft ein Herstellungsverfahren für einen Rotor für eine elektrische Maschine.

Unter dem Begriff der permanentmagneterregten Elektromotoren werden im Allgemeinen sowohl der der bürstenlose Gleichstrommotor (BLDC-, BL- oder EC-Motor) als auch die permanentmagneterregte Synchronmaschine (PMSM) verstanden. Der bürstenlose Gleichstrommotor kann als eine Bauform des Gleichstrommotors verstanden werden, bei dem eine elektronische Schaltung den bei herkömmlichen Gleichstrommotoren üblichen mechanischen Kommutator mit Bürsten zur Stromwendung ersetzt. Die Ausführungsformen gattungsgemäßer bürstenloser Gleichstrommotoren reichen von einfachsten Servomotoren für Stelleinrichtungen bis zu leistungsstarken Speichen- und anderen Antriebsmotoren. Die permanentmagneterregte Synchronmaschine wird hingegen zur Gattung der Drehstrommaschinen zugeordnet. Insbesondere in besonders leistungsfähigen elektrisch getriebenen Kühlmittelpumpen oder Ölpumpen kann solch ein gattungsgemäßer Elektromotor zum Einsatz kommen.

Bürstenlose permanentmagneterrege Elektromotoren nach dem Stand der Technik umfassen typischerweise einen Rotor auf der Basis eines Permanentmagneten sowie einen feststehenden Stator mit einer Mehrzahl von Spulen. Letztere werden - koordiniert von einer elektronischen Schaltung - zeitlich versetzt von elektrischem Strom durchflossen, um ein elektromagnetisches Drehfeld zu erzeugen, welches seinerseits ein mechanisches Drehmoment am permanent erregten Rotor hervorrufen kann.

Um das verbaute Magnetmaterial effizient zu nutzen und die Drehmomentdichte des Gleichstrommotors zu erhöhen, wird nach dem Stand der Technik mitunter das Wirkprinzip der sogenannten Flusskonzentration eingesetzt, bei welchem der magnetische Fluss aus den Magneten auf eine kleinere Polfläche am Rotor gebündelt wird. Diese Herangehensweise ermöglicht beispielweise trotz einer geringeren Remanenzflussdichte die Verwendung von Ferritmagneten anstelle der ungleich teureren seltenen Erden und gestattet somit letztlich eine wirtschaftlich vorteilhafte Senkung der Stückkosten.

Als Nachteil dieses Ansatzes mag indes ein unerwünschter magnetischer Streufluss gelten, der sowohl am Innendurchmesser auch als auch am Außendurchmesser des Rotors auftritt und durch die Flusskonzentration begünstigt oder verstärkt werden kann. Ein derartiger Streufluss bewirkt im Rotor gleichsam einen partiellen magnetischen Kurzschluss und verringert somit im Ergebnis den Wirkungsgrad des gesamten bürstenlosen Gleichstrommotors.

Die US 4,336,649 A offenbart ein Verfahren zum Herstellen eines Rotors. Bei dem Verfahren wird ein länglicher erster Dauermagnet mit einem zylindersegmentförmigen ersten Rotorblechsegment und einem dem ersten Rotorblechsegment formgleichen, zweiten Rotorblechsegment zu einer Montageeinheit vorgefügt.

Der Erfindung liegt die Aufgabe zugrunde, einen bürstenlosen Gleichstrommotor hinsichtlich seines Rotors so zu modifizieren, dass - bei konkurrenzfähigen Herstellungskosten - sein Wirkungsgrad zunimmt. Die Erfindung stellt sich der Aufgabe, ein Herstellungsverfahren für einen solchen Rotor zu schaffen.

Diese Aufgabe wird durch ein Herstellungsverfahren für einen Rotor mit den Merkmalen des Anspruchs 1 gelöst.

Die Erfindung fußt demnach auf dem Grundgedanken, den dauermagnetischen Rotor einer als Innenläufer konzipierten elektrischen Maschine, insbesondere einer bürstenlosen permanentmagneterregten Maschine (BLDC und PMSM), konstruktiv abzuwandeln, um den magnetischen Streufluss an seinem Innen- und Außendurchmesser auf ein Mindestmaß zu reduzieren. Die mechanische Wirksamkeit des Rotors, welche insbesondere eine sichere Drehmomentübertragung zwischen seinem Blechpaket und der lagernden Welle erfordert, bleibt dabei mittels einer geschickten Verbindungstechnik gewahrt.

Gemäß diesem Grundgedanken verzichtet der erfindungsgemäße Ansatz auf eine unmittelbare Fügeverbindung zwischen Welle und Blechpaket entlang dessen Innendurchmessers, da sich entsprechende, insbesondere metallische Verbindungselemente - etwa in der Gestalt breiter Stege - aufgrund ihrer geringen Reluktanz als eine magnetisch hoch leitende Verbindung darstellen, den Rotorstreufluss erhöhen, und damit das drehmomentwirksame Rotorhauptfeld reduzieren. Stattdessen wird auf geschickte Weise das Blechpaket mit der Welle über eine ebenfalls auf dieser gelagerte, mittels eines aus ihr ragenden Verbindungsstegs in das Blechpaket eingreifenden Stirnscheibe drehstarr verbunden, sodass sich die Lage des Verbindungselements vom Innendurchmesser des Blechpakets in dessen radialer Richtung nach außen verlagert. Dadurch wird dem Streufluss entlang des Innendurchmessers ein maximaler Luftspalt entgegengesetzt, welcher aufgrund seiner hohen Reluktanz dessen Ausprägung minimiert. Entsprechende Aussparungen seitens des Blechpakets, welche das Eingreifen der beschriebenen Verbindungsstege gestatten, können im Querschnitt beispielsweise rund oder tropfenförmig ausgeführt sein, um der bevorzugten Zylinderform der Verbindungsstege eine weitgehend formschlüssige Auflagefläche bieten zu können.

Die erfindungsgemäße Verbindungstechnik erlaubt es nunmehr, einen radial verlaufenden Dauermagneten beträchtlicher Länge in das Blechpaket einzubetten, da auf stirnseitige Befestigungselemente und Flussbarrieren verzichtet werden kann, welche den maximal für die Dauermagneten zur Verfügung stehenden Bauraum im Falle herkömmlicher elektrischer Maschinen konstruktiv begrenzen. Der Entfall jeglicher magnetisch leitender Stege oder Nasen zur Fixierung des Magneten, sowohl am Innen- als auch am Rotoraußendurchmesser, reduziert den Streufluss erheblich. In Kombination mit einer höheren radialen Ausdehnung der Dauermagneten wiederum ermöglicht dies die Verwendung herkömmlicher Ferrite anstelle der teureren seltenen Erden als Magnetmaterial.

Konventionelle stirnseitige Befestigungsstege, welche die Dauermagneten elastisch innerhalb des Blechpakets verspannen, können somit optional durch eine seitliche Verbindung der Dauermagneten mit jeweils angrenzenden radialen Rotorblechsegmenten ersetzt werden. In Betracht kommt etwa ein stoffschlüssiger Verbund im Wege einer geeigneten Klebetechnik. Die erwähnten - im Querschnitt beispielsweise runden oder tropfenförmigen - Aussparungen lassen sich in diesem Fall vorteilhaft in besagte Rotorblechsegmente einbringen, um den die Dauermagneten durchdringenden magnetischen Fluss möglichst wenig zu beeinträchtigen.

Ungeachtet etwaiger Aussparungen ist dabei auch an eine elastische Ausbildung des Rotorblechsegments selbst zu denken, welches somit über seine seitliche Anlagefläche eine wohldosierte Vorspannkraft auf den angrenzenden Dauermagneten auszuüben vermag. Eine solche form- und kraftschlüssige Verbindung lässt sich mittels einer das Blechpaket umschließenden Rotorhülse verstärken, wobei sich dem Fachmann an dieser Stelle unterschiedlichste Gestaltungsvarianten bieten.

Auch verfahrenstechnisch bietet die erfindungsgemäße Anordnung ein hohes Optimierungspotenzial, wobei hier dem Ausgleich fertigungsbedingter Toleranzen der einzelnen Komponenten besonderes Augenmerk zukommt. Als hilfreich erweist sich in diesem Zusammenhang vor allem die Verwendung einer annähernd rotationssymmetrischen Montagehülse, in welche Rotorblechsegmente und Dauermagneten eingelegt und mittels eines geeigneten Abstandhalters, beispielsweise in Form eines Bolzens, zueinander ausgerichtet werden. Das Einfügen der Dauermagneten in die Montagehülse lässt sich dabei erleichtern, wenn sich besagte Montagehülse in der vorgesehenen Einführrichtung zumindest abschnittsweise konisch verjüngt, sodass sie Rotorblechsegmente und Magneten schon während ihres Einführens gleichsam zu einem nahezu hohlraumfreien Blechpaket komprimiert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine perspektivische Ansicht des Blechpakets eines Rotors gemäß einer ersten Ausführungsform,
- Fig. 2: einen stark vereinfachten Längsschnitt des vollständigen Rotors gemäß der ersten Ausführungsform,
- Fig. 3: einen vereinfachten Querschnitt des Rotors gemäß der ersten Ausführungsform,
- Fig. 4: den Figur 3 entsprechenden Querschnitt eines Rotors gemäß einer zweiten Ausführungsform,
- Fig. 5: den bereichsweisen Querschnitt eines Rotors gemäß einer dritten Ausführungsform,
- Fig. 6: eine Seitenansicht des Rotors gemäß der dritten Ausführungsform ohne dessen Hülse,
- Fig. 7: eine Figur 6 entsprechende Seitenansicht des vollständigen Rotors gemäß der dritten Ausführungsform,
- Fig. 8: den vereinfachten Querschnitt eines Rotors gemäß einer vierten Ausführungsform,
- Fig. 9: den bereichsweisen Querschnitt eines Rotors gemäß einer fünften Ausführungsform,
- Fig. 10: eine Einzelheit der Figur 9,
- Fig. 11: den bereichsweisen Querschnitt eines Rotors gemäß einer sechsten Ausführungsform,
- Fig. 12: eine Einzelheit der Figur 11,
- Fig. 13: den teilweisen Längsschnitt eines Rotors gemäß einer siebten Ausführungsform ohne dessen Stirnscheibe,
- Fig. 14: einen Figur 13 entsprechenden Längsschnitt des vollständigen Rotors gemäß der siebten Ausführungsform,
- Fig. 15: die Draufsicht einer Federscheibe des Rotors gemäß der siebten Ausführungsform,
- Fig. 16: eine Einzelheit der Figur 13,
- Fig. 17: den Querschnitt des Rotors gemäß der dritten Ausführungsform in einer ersten Herstellungsphase,
- Fig. 18: den Figur 17 entsprechenden Querschnitt des Rotors gemäß der dritten Ausführungsform in einer zweiten Herstellungsphase,
- Fig. 19: den Längsschnitt des Rotors gemäß der dritten Ausführungsform in einer dritten Herstellungsphase,
- Fig. 20: den Figur 19 entsprechenden Längsschnitt des Rotors gemäß der dritten Ausführungsform in einer vierten Herstellungsphase,
- Fig. 21: den Figur 19 entsprechenden Längsschnitt des Rotors gemäß der dritten Ausführungsform in einer fünften Herstellungsphase und
- Fig. 22: den Figur 19 entsprechenden Längsschnitt des Rotors gemäß der dritten Ausführungsform in einer sechsten Herstellungsphase.

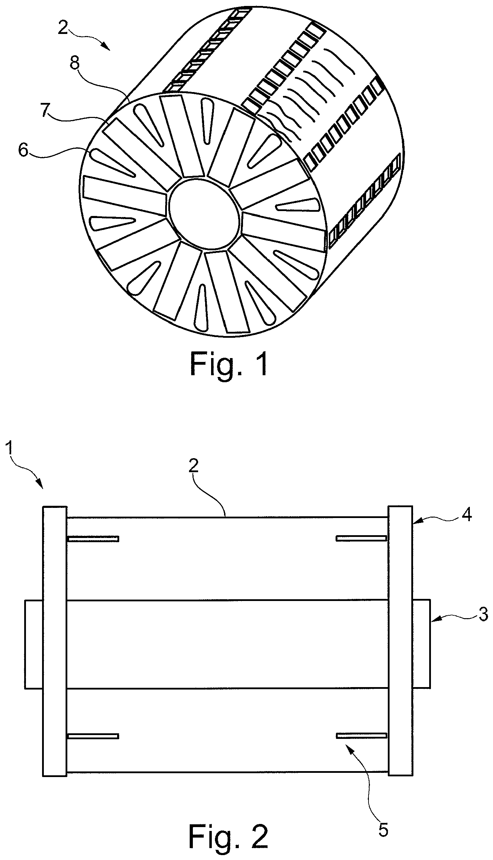

Die Figuren 1 bis 3 illustrieren den grundlegenden Aufbau eines Rotors gemäß einer ersten Ausführungsform. Der Rotor ist dabei als Innenläufer eines bürstenlosen Gleichstrommotors vorgesehen, dessen im Wesentlichen zylindrisches Blechpaket 2 mittels sternförmig nach außen verlaufender ferritischer Dauermagneten 7 einer nahezu dem Gesamtradius des Blechpakets 2 entsprechenden Länge permanenterregt wird. Die das Blechpaket 2 bildenden Bleche selbst werden hierzu mittels eines Spezialwerkzeugs gemäß einer spezifischen Fenstertechnik unterschiedlich gestanzt und in regelmäßigen Abständen im Wege des Stanzpaketierens untereinander zu zusammenhängenden Rotorblechsegmenten 8 verbunden, welche die seiner vorgesehenen Drehachse entsprechende Mittelachse des Blechpakets 2 im stetigen Wechsel mit den Dauermagneten 7 umlaufen.

Besonderes Augenmerk kommt dabei der spezifischen Formgebung einer Reihe radial verlaufender Aussparungen 6 der einzelnen Rotorblechsegmente 8 zu. Jede dieser Aussparungen 6 verjüngt sich in der dem Betrachter der Figur 1 zugewandten Stirnfläche ausgehend von einem äußeren Halbkreis, welcher sich knapp innerhalb des Außenumfangs des jeweiligen Rotorblechsegments 8 an dessen kreissegmentförmigen Außenmantel anschmiegt, in Richtung der zur Mittelachse des Blechpakets 2 weisenden Spitze des Rotorblechsegments 8 entlang zweier gerader Schenkel, die wiederum beidseitig in einen inneren Halbkreis geringeren Durchmessers übergehen und der Aussparung 6 somit eine Tropfenform verleihen.

Der Längsschnitt der Figur 2 verdeutlicht die Funktion dieser Aussparungen anhand des Gesamtaufbaus eines Rotors 1, dessen Kernkomponente das Blechpaket 2 der Figur 1 bildet. Insofern werden insgesamt vier annähernd zylindrische, an zwei gegenüberliegenden Stirnseiten des Blechpakets 2 in dieses eingreifende Verbindungsstege 5 erkennbar, die starr aus beidseitig von einer drehbaren Welle 3 getragenen Stirnscheiben 4 in die - in Figur 2 nicht eigens dargestellten - Aussparungen 6 hineinragen und besagte Welle 3 somit drehstarr mit dem Blechpaket 2 verbinden. Die Welle 3 lagert somit nicht nur die Stirnscheiben 4, sondern mittelbar auch das von diesen umschlossene Blechpaket 2 mittels der paarweise koaxialen Verbindungsstege 5 und erlauben so die Übertragung eines im Betrieb wirkenden Drehmoments zwischen Welle 3 und Paket 2.

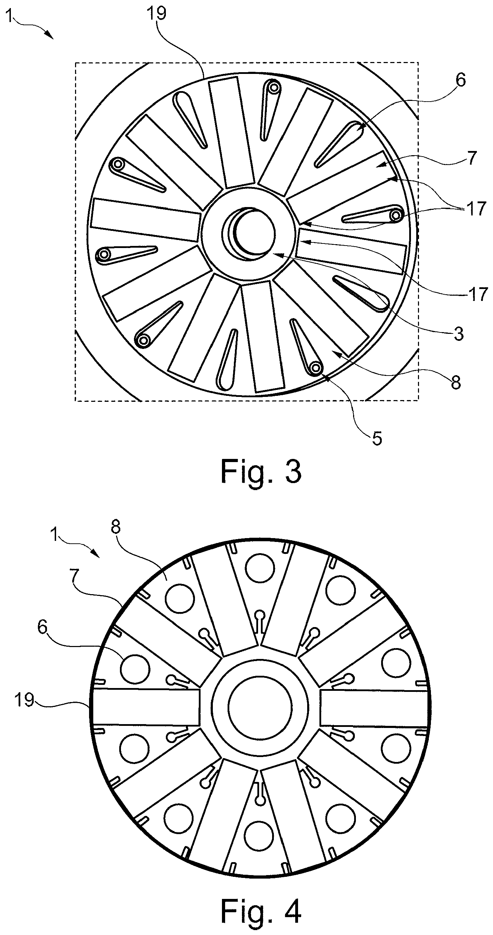

Das zielgerichtete Zusammenwirken der Verbindungsstege 5 und der Aussparungen 6 ist auch dem Querschnitt der Figur 3 zu entnehmen: So wird deutlich, dass die Verbindungsstege 5 jeweils einen Durchmesser aufweisen, welcher jenen des äußeren Halbkreises der korrespondierenden Aussparung 6 nur geringfügig unterschreitet. Auf diese Weise ruht jeder Verbindungssteg 5 zuverlässig im äußeren Bereich der ihm zugeordneten Aussparung 6, wobei die Beweglichkeit des Stegs 5 in radialer Richtung des Blechpakets 2 geringfügige Toleranzen ausgleichen kann.

Welle 3 und Verbindungsstege 5 sind dabei aus einem Werkstoff hohen magnetischen Widerstands gefertigt; zusätzlich ist jeder Verbindungssteg 5, wie bereits der Längsschnitt der Figur 2 erkennen lässt, möglichst kurz ausgeführt. Die Kombination beider Maßnahmen reduziert die Bildung eines magnetischen Streuflusses innerhalb des Blechpakets 2 auf das notwendige Mindestmaß, ohne den - im Wege der beschriebenen Fenstertechnik herbeigeführten - strukturellen Zusammenhang der einzelnen Rotorblechsegmente 8 zu gefährden.

Der Darstellung der Figur 3 sind zudem dünne, federnde Befestigungsstege 17 zu entnehmen, welche an mindestens einer Stirnseite jedes Dauermagneten 7 auf diesen einwirken. Durch ihre spezifische Konfiguration üben diese Befestigungsstege 17 einzeln oder paarweise eine elastische Vorspannkraft 7 in Radialrichtung des Blechpakets 2 auf den ihnen zugeordneten Dauermagneten 7 aus, sodass dieser in seiner vorgesehenen Position fixiert wird, ohne seinen radialen Bauraum wesentlich einzuschränken. Zur Lagesicherung der Dauermagneten 7 dient auch die zylindrische Rotorhülle 19, welche das Blechpaket 2 vollumfänglich umschließt.

Figur 4 zeigt in einer der Figur 3 entsprechenden Schnittdarstellung einen Rotor 1 gemäß einer zweiten Ausführungsform, welcher sich von jenem der ersten Ausführungsform vorrangig in der Ausgestaltung seines Blechpakets unterscheidet. Insofern wurden die im Querschnitt tropfenförmigen Aussparungen 6 der Figuren 1 und 3 in Figur 4 durch kreisrunde Aussparungen 6 größeren Durchmessers ersetzt. Eine weitere konstruktive Eigenheit des Rotors 1 der Figur 4 ist in der Elastizität seiner Rotorblechsegmente 8 zu erkennen, die durch eine charakteristische Anordnung in radialer Richtung des Blechpakets verlaufender Nuten erreicht wird.

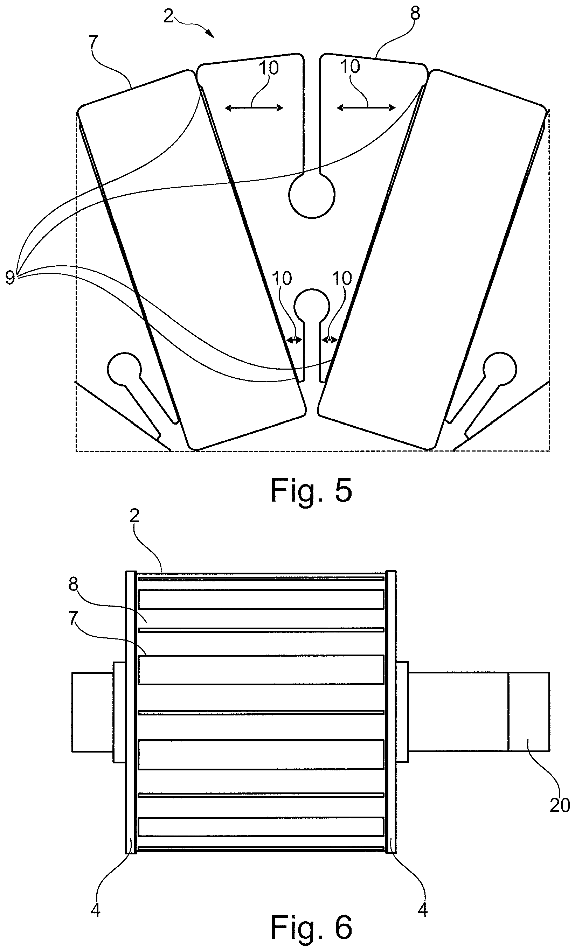

Die Funktion dieser Nuten sei nunmehr anhand der leicht vereinfachten dritten Ausführungsform der Figuren 5 bis 7 erläutert, welche auf die mittigen Aussparungen jedes Rotorblechsegments 8 zugunsten einer mittigen äußeren Nut verzichtet, deren Form im Wesentlichen der Form seiner in die Spitze des Rotorblechsegments 8 mündenden inneren Nut geringerer Tiefe entspricht. Die entlang eines gemeinsamen Radius des Rotorblechsegments 8 einander zugewandten Nuten verleihen diesem eine näherungsweise in Umfangsrichtung des Blechpakets wirkende Federkraft 10, die das Segment 8 einerseits - seinem vorrangigen Zweck entsprechend - an innere und äußeren Anlageflächen 9 der beidseitigen Dauermagneten 7 ähnlich dem Wirkprinzip einer Spreizzange form- und kraftschlüssig anpresst. Andererseits erlaubt die Elastizität des Rotorblechsegments 8 dessen Schenkeln, einer durch die Dauermagneten 7 in der Breite ausgeübten Rückstellkraft, die etwa durch Herstellungstoleranzen bedingt sein mag, durch eine Verengung der Nuten innerhalb der Elastizitätsgrenzen des Werkstoffs auszuweichen.

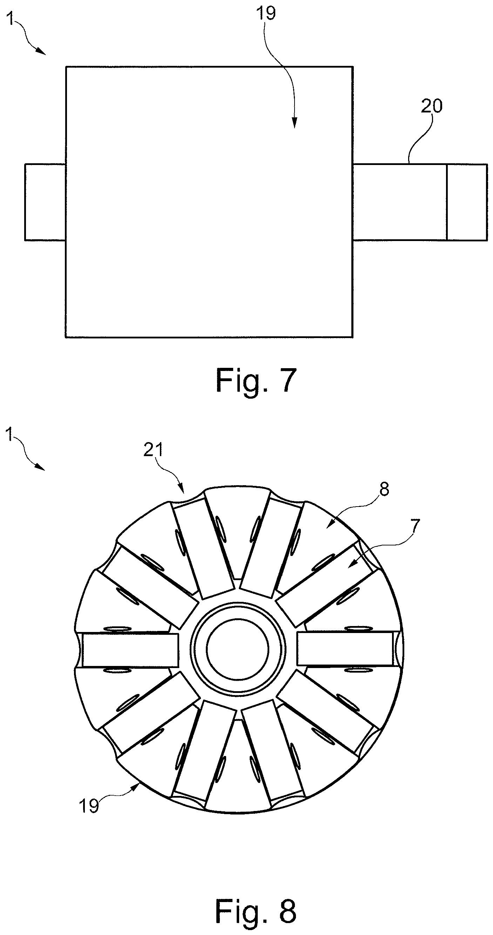

Weitere Vorrichtungsmerkmale der dritten Ausführungsform sind den einander perspektivisch entsprechenden Längsschnitten der Figuren 6 und 7 zu entnehmen. So sind in Figur 6 abermals die beidseitig das - aus den Dauermagneten 7 und Rotorblechsegmenten 8 gebildete - Blechpaket 2 umschließenden Stirnscheiben 4 sowie eine Paket 2 und Scheiben 4 koaxial durchlaufende Lagerhülse 20 erkennbar. In der vollständigen Darstellung des Rotors 1 nach Figur 7 indes ist das Blechpaket 2 mitsamt seiner Stirnscheiben 4 in einer koaxial zu der Lagerhülse 20 verlaufenden, zylindrischen Rotorhülse 19 aufgenommen.

Einen hinsichtlich der Verbindung zwischen Rotorblechsegmenten und Dauermagneten leicht abgewandelten Ansatz verfolgt die anhand der Querschnittsdarstellung der Figur 8 verdeutlichte vierte Ausführungsform eines Rotors 1. Anstelle der charakteristischen Nutung der Figuren 4 und 5 bedient sich diese Ausgestaltung zweier beidseitig in jedes Rotorblechsegment 8 integrierter Federelemente zur seitlichen Lagesicherung der Dauermagneten 7. Darüber hinaus sind konkave Vertiefungen 21 in die Rotorhülse 19 geprägt oder rolliert, sodass der resultierende Formschluss zwischen Dauermagnet 7 und Rotorhülse 19 am Innenboden der Vertiefung 21 auch ein Herausrutschen der Dauermagneten 7 aus dem Blechpaket in radialer Richtung weitgehend auszuschließen vermag.

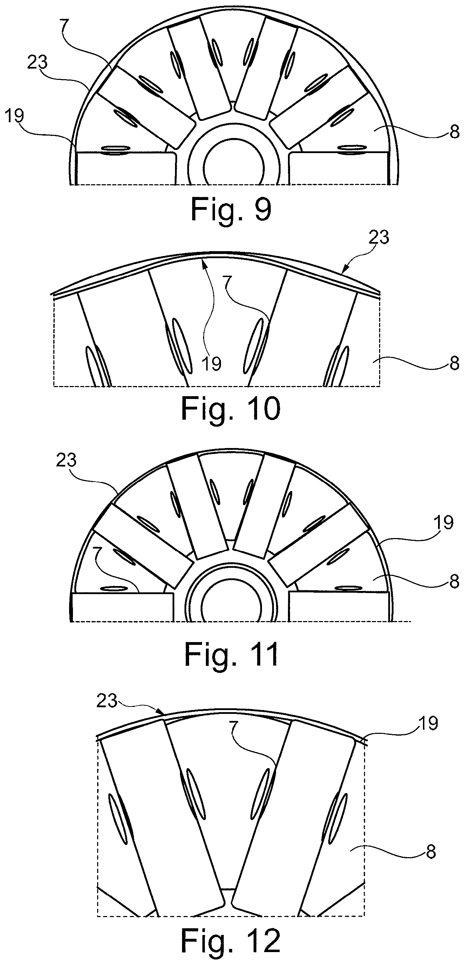

Auch in der fünften Ausführungsform gemäß der unterschiedlich detaillierten Teilquerschnitte der Figuren 9 und 10 stehen die äußeren Stirnflächen der Dauermagneten 7 hinter dem vom Blechpaket eingenommenen zylindrischen Hüllraum 23 zurück, welcher durch den äußersten Punkt der rotierenden Mantelflächen sämtlicher Rotorblechsegmente 8 definiert wird. In dieser Ausgestaltung jedoch sind die Rotorblechsegmente 8 mit einem gegenüber dem Hüllraum 23 verringerten Radius ausgeführt und derart radial gegenüber den Dauermagneten 7 nach außen versetzt, dass deren der Welle 3 abgewandte Stirnflächen bündig in die angrenzende Mantelflächen der beidseitigen Rotorblechsegmente 8 übergeht. Die diesem Oberflächenverlauf angepasste Rotorhülse 19 schmiegt sich der durch die Dauermagneten 7 und die Rotorblechsegmente 8 gebildeten Außenoberfläche des Blechpakets formschlüssig an, sodass sich die Rotorhülse 19 gleichsam über den ebenen Stirnflächen der Dauermagneten 7 spannt, zwischen diesen jedoch - der Mantelwölbung der Rotorblechsegmente 8 entsprechend - konvex wölbt.

Den in der Außenoberfläche des Blechpakets gleichsam versenkten Stirnflächen der Dauermagneten gemäß den vierten und fünften Ausführungsformen stellen die Figuren 11 und 12 einen spiegelbildlichen Versatz der Dauermagneten 7 in radialer Außenrichtung des Blechpakets gegenüber. Gemäß dieser sechsten Ausführungsform wird der Hüllraum 23 durch die beidseitigen Kanten der Stirnflächen der Dauermagneten 7 definiert, welche die der Welle 3 abgewandten Mantelflächen der sie einschließenden Rotorblechsegmente 8 zu diesem Zweck in radialer Richtung leicht überragen. Der resultierende radiale Versatz zwischen den alternierend angeordneten Magneten 7 und Segmenten 8 hinterlässt an der Innenoberfläche der Rotorhülse 19 im Bereich jedes Rotorblechsegments 8 zwei an den Außengrenzen der jeweiligen Mantelfläche ansetzende und nach innen spitz zulaufende Hohlräume, sodass die Rotorhülse 19 auch in diesem Szenario die Dauermagneten 7 über ihre äußeren Stirnflächen radial nach innen zu "verspannen" scheint.

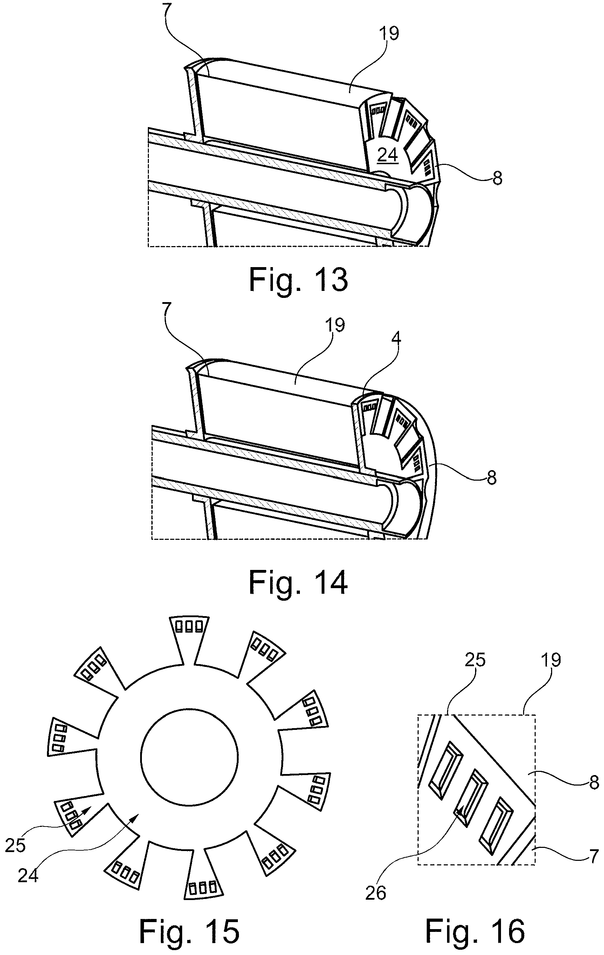

Die siebte Ausführungsform der Figuren 13 bis 16 indes widmet sich vorrangig dem Problem der axialen Lagesicherung des aus den Dauermagneten 7 und Rotorblechsegmenten 8 gebildeten Blechpakets, wobei die Figuren 13 und 14 das dieser Ausgestaltung zugrunde liegende Wirkprinzip in einander entsprechenden Übersichtsdarstellungen beleuchten. Die lediglich in Figur 14 teiltransparent dargestellte, dem Betrachter beider Abbildungen zugewandte Stirnscheibe 4 berührt in dieser konstruktiven Variante nicht unmittelbar das Blechpaket, sondern ist von diesem durch eine Federscheibe 24 getrennt, welche etwaige Längentoleranzen der Rotorblechsegmente 8 auf geschickte Weise auszugleichen vermag. Der gewünschte axiale Federweg wird dabei mittels jeweils dreier rechteckiger Federelemente 26, welche in zehn konzentrisch entlang des Außenumfangs der Federscheibe 24 geformte Federsegmente 25 in Gestalt gleichschenkliger Trapeze integriert sind. Somit ergibt sich eine Anordnung, bei welcher jedem Rotorblechsegment 8 ein Federsegment 25 zugeordnet ist, welches das Rotorblechsegment 8 gemäß dem bekannten Prinzip einer Federklemme in axialer Richtung vorspannt.

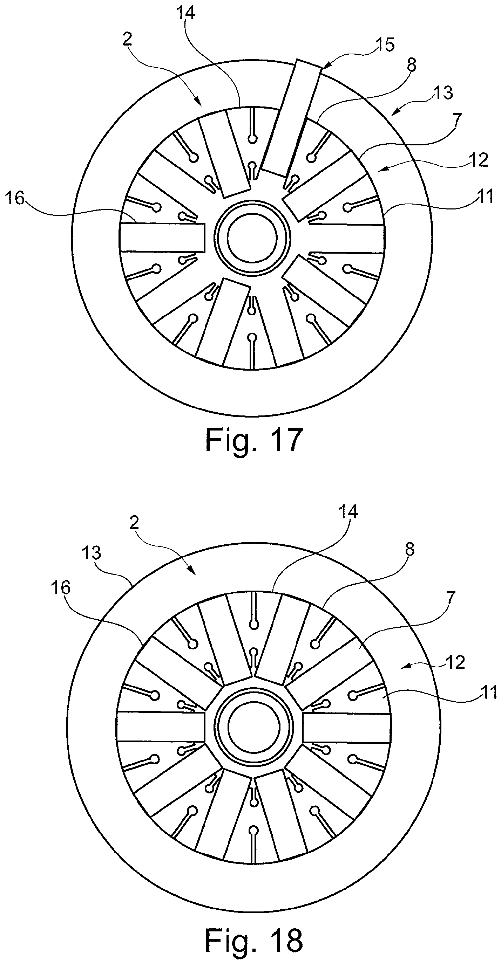

Die übrigen Figuren 17 bis 22 schließlich wenden sich einem erfindungsgemäßen Verfahren zur Herstellung eines Rotors zu, das anhand der dritten Ausführungsform der Figuren 5 bis 7 - in den Figuren 17 und 18 zunächst im Querschnitt, dann weiter im Längsschnitt - in sechs Phasen seines Ablaufs diskutiert werden soll.

Der ersten Herstellungsphase gemäß Figur 17 geht dabei in einem vorbereitenden Verfahrensschritt die Montage eines ersten Dauermagneten 7 sowie zweier beidseitig an diesen zu fügender Rotorblechsegmente 8, 11 zu einer kompakten Montageeinheit 12 voraus, deren Zusammenhalt beispielsweise mittels einer geeigneten Klebetechnik gesichert werden kann. Die so gebildete, in Figur 17 bereits in ihrem vormontierten Zustand gezeigte Montageeinheit 12 wird gemäß der Abbildung in eine als Hilfsvorrichtung eingesetzte Montagehülse 13 eingesetzt und um - dem ersten und zweiten Rotorblechsegment 8, 11 im Wesentlichen formgleiche - weitere Rotorblechsegmente 14 ergänzt. Figur 17 verdeutlicht dabei den Einsatz eines bolzenförmigen, hinsichtlich seiner Breite annähernd dem ersten Dauermagneten 7 entsprechenden Abstandhalters 15, welcher in diesem Prozessstadium eine vorläufige Positionierung jeweils zweier benachbarter Rotorblechsegmente 8, 11, 14 innerhalb der Montagehülse 13 erlaubt, zwischen die er zu diesem Zweck in radialer Richtung eingeschoben wird. Sobald diese zunächst grobe Ausrichtung abgeschlossen ist, lassen sich die weiteren Dauermagneten 16 in die verbleibenden, näherungsweise gleich breiten Zwischenräume einfügen, sodass sich - gemäß Figur 2 - eine rotationssymmetrische Spielpassung des Blechpakets 2 innerhalb der umlaufenden Ringform der Montagehülse 13 ergibt.

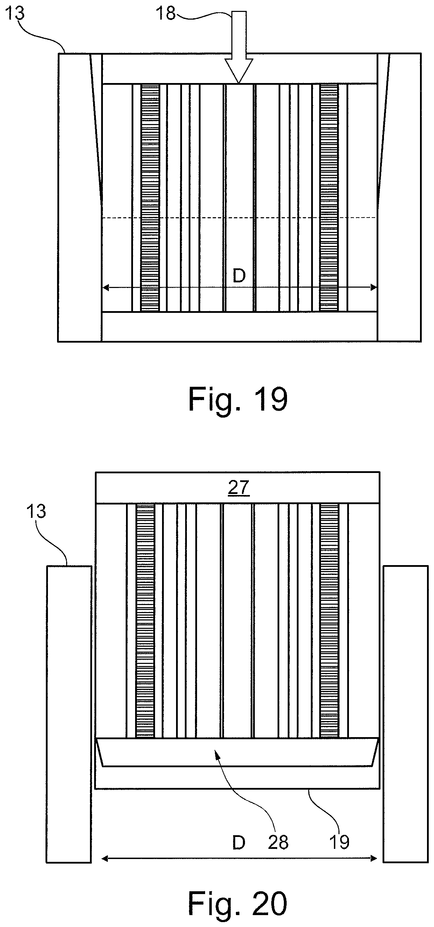

Die in Figur 19 gezeigte dritte Herstellungsphase bezweckt nunmehr eine Verfeinerung der Rotorform hinsichtlich ihres Durchmessers, welcher dem Innendurchmesser D der vorgesehenen Rotorhülse so weit als möglich angenähert werden soll. Hierzu dient ein Hohlkegelabschnitt der Montagehülse 13, entlang dessen sie sich in der vorgesehenen Montagerichtung 18 kontinuierlich auf den Innendurchmesser D verjüngt, sodass er das Blechpaket während des Einschiebens verpresst.

In einer vierten Herstellungsphase, die der Darstellung gemäß Figur 20 zugrunde liegt, wird das solchermaßen komprimierte Blechpaket mittels eines Stempels 27 in seine vorgesehene Rotorhülse 19 eingepresst, wobei die angestrebte Relativbewegung von Blechpaket und Hülse 19 gleichermaßen durch Einwirken auf jeden der beiden Verbindungspartner bewerkstelligt werden mag. In beiden Varianten erweist es sich als hilfreich, eine mit einer Einführschräge 28 versehene Stirnscheibe oder anderweitige Hilfsvorrichtung dem Blechpaket voran in die Rotorhülse 19 einzuführen, um die angestrebte Presspassung der Ummantelung zu erzielen.

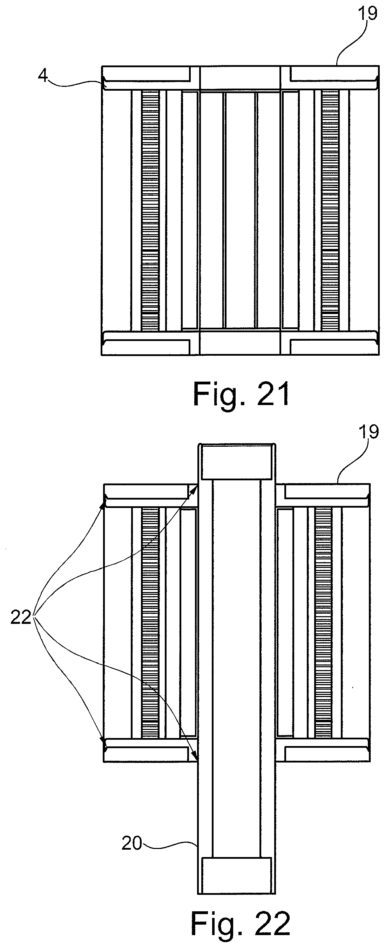

Wahlweise vor oder - wie in der fünften Herstellungsphase des vorliegenden Beispiels gemäß Figur 21 - nach dem Einpressen der Rotorhülse 19 erfolgt das beidseitige Aufpressen der Stirnscheiben 4 auf das Blechpaket, bevor eine zur Aufnahme der Welle vorgesehene Lagerhülse 20 durch Blechpaket und Stirnscheiben 4 geführt werden kann. Figur 22 illustriert diesen - einer sechsten Herstellungsphase entsprechenden - vorläufigen Endzustand der Montage, in welchem das Blechpaket 2, die beidseitig aufgepressten Stirnscheiben 4 sowie die Lagerhülse 20 durch zusätzliche Fügeverbindungen in Gestalt mehrerer Laserschweißnähte 22 in ihrer relativen Position gesichert wurden.

## Patentansprüche

1. Verfahren zum Herstellen eines Rotors (1) für eine elektrische Maschine, umfassend
- das beidseitige Vorfügen, insbesondere Verkleben, eines länglichen ersten Dauermagneten (7) mit einem zylindersegmentförmigen ersten Rotorblechsegment (8) und einem dem ersten Rotorblechsegment (8) formgleichen zweiten Rotorblechsegment (11) zu einer Montageeinheit (12),
- das Einlegen der Montageeinheit (12) in eine im Wesentlichen rotationssymmetrische Montagehülse (13), **gekennzeichnet durch**
- das Einlegen dem ersten und zweiten Rotorblechsegment (8, 11) formgleicher weiterer Rotorblechsegmente (14) in die Montagehülse (13),
- das relative Ausrichten jeweils zweier benachbarter Rotorblechsegmente (8, 11, 14) in der Montagehülse (13) mittels eines dem ersten Dauermagneten (7) formgleichen Abstandhalters (15), insbesondere eines Bolzens, und
- das Einfügen dem ersten Dauermagneten (7) und dem Abstandhalter (15) formgleicher weiterer Dauermagneten (16) zwischen die benachbarten, relativ zueinander ausgerichteten Rotorblechsegmente (8, 11, 14).

2. Verfahren nach Anspruch 1,
**dadurch gekennzeichnet,**
**dass** die weiteren Dauermagneten (16) in einer axialen Montagerichtung (18) der Montagehülse (13) eingefügt werden, wobei die Montagehülse (13) sich in der Montagerichtung (18) entlang eines Hohlkegelabschnitts auf den Innendurchmesser (D) einer vorgesehenen Rotorhülse (19) des Rotors (1) verjüngt, sodass die Montagehülse (13) die Rotorblechsegmente (8, 11, 14) mit den Dauermagneten (7, 16) zu einem Blechpaket (2) komprimiert.

3. Verfahren nach Anspruch 2,
**gekennzeichnet durch**
- das stirnseitige Aufpressen mindestens einer Stirnscheibe (4) auf das Blechpaket (2),
- das Einpressen des Blechpakets (2) in die Rotorhülse (19), vorzugsweise mittels eines Stempels (27), und
- das Durchführen einer Lagerhülse (20) durch die Stirnscheibe (4) und das Blechpaket (2).

4. Verfahren nach Anspruch 3,
**dadurch gekennzeichnet, dass**
das Blechpaket (2) mit der Stirnscheibe (4) voran entlang einer Einführschräge (28) der Stirnscheibe (4) in die Rotorhülse (19) eingepresst wird.

5. Verfahren nach Anspruch 3 oder 4,
**gekennzeichnet durch**
- das plastische Formen, insbesondere Einprägen, mindestens einer Vertiefung (21) in der Rotorhülse (19) während oder nach dem Einpressen dergestalt, dass die Vertiefung (21) die Rotorhülse (19) formschlüssig mit dem Blechpaket (2), vorzugsweise stirnseitig mit einem der Dauermagneten (7, 16) verbindet.

6. Verfahren nach einem der Ansprüche 3 bis 5,
**gekennzeichnet durch**
- das Endfügen des Blechpakets (2), der Stirnscheibe (4) und der Lagerhülse (20) mittels einer Schweißnaht (22), insbesondere einer Laserschweißnaht.

## Claims

1. Method for manufacturing a rotor (1) for an electrical machine, comprising
- double-sided pre-joining, in particular bonding, of an elongated first permanent magnet (7) with a cylinder-segmented first rotor plate segment (8) and a second rotor plate segment (11) which is identical in shape to the first rotor plate segment (8), to an assembly unit (12),
- inserting the assembly unit (12) into a substantially rotationally symmetric assembly sleeve (13), **characterised by**
- inserting further rotor plate segments (14) which are identical in shape to the first and second rotor plate segment (8, 11) into the assembly sleeve (13),
- relative aligning of two adjacent rotor plate segments (8, 11, 14) in the assembly sleeve (13) by means of a spacer (15) which is identical in shape to the first permanent magnet (7), in particular a bolt, and
- inserting further permanent magnets (16) which are identical in shape to the first permanent magnet (7) and the spacer (15) between the adjacent rotor plate segments (8, 11, 14) which are oriented relative to each other.

2. Method according to claim 1,
**characterised in that**
the further permanent magnets (16) are inserted in an axial assembly direction (18) of the assembly sleeve (13), wherein the assembly sleeve (13) is tapered in the assembly direction (18) along a hollow cone section to the inner diameter (D) of a provided rotor sleeve (19) of the rotor (1), so that the assembly sleeve (13) compresses the rotor plate segments (8, 11, 14) with the permanent magnets (7, 16) to a laminated core (2).

3. Method according to claim 2,
**characterised by**
- pressing at least one front plate (4) on the face-side onto the laminated core (2),
- pressing the laminated core (2) into the rotor sleeve (19), preferably by means of a stamp (27), and
- guiding a bearing sleeve (20) through the front plate (4) and the laminated core (2).

4. Method according to claim 3,
**characterised in that**
the laminated core (2) is pressed, with the front plate (4) first, along an insertion chamfer (28) of the front plate (4) into the rotor sleeve (19).

5. Method according to claim 3 or 4,
**characterised by**
- plastic forming, in particular imprinting, of at least one recess (21) in the rotor sleeve (19) during or after the pressing, such that the recess (21) connects the rotor sleeve (19) to the laminated core (2) in a form fitting manner, preferably at the face-side with one of the permanent magnets (7, 16).

6. Method according to any of claims 3 to 5,
**characterised by**
- final joining of the laminated core (2), the front plate (4) and the bearing sleeve (20) by means of a weld seam (22), in particular a laser weld seam.

## Revendications

1. Procédé servant à fabriquer un rotor (1) pour une machine électrique, comprenant
- l'assemblage préalable de part et d'autre, en particulier le collage, d'un premier aimant permanent (7) oblong à un premier segment de tôle de rotor (8) en forme de segment cylindrique et à un deuxième segment de tôle de rotor (11) de forme identique à celle du premier segment de tôle de rotor (8) pour obtenir une unité de montage (12),
- la pose de l'unité de montage (12) dans un manchon de montage (13) sensiblement symétrique en rotation, **caractérisé par**
- la pose de segments de tôle de rotor (14) supplémentaires de forme identique à celle du premier et du deuxième segment de tôle de rotor (8, 11) dans le manchon de montage (13),
- l'orientation relative respectivement de deux segments de tôle de rotor (8, 11, 14) adjacents dans le manchon de montage (13) au moyen d'un écarteur (15) de forme identique à celle du premier aimant permanent (7), en particulier d'un boulon, et
- l'insertion d'aimants permanents (16) supplémentaires de forme identique à celle du premier aimant permanent (7) et de l'écarteur (15) entre les segments de tôle de rotor (8, 11, 14) adjacents orientés les uns par rapport aux autres.

2. Procédé selon la revendication 1,
**caractérisé en ce**
**que** les aimants permanents (16) supplémentaires sont insérés dans une direction de montage (18) axiale du manchon de montage (13), dans lequel le manchon de montage (13) se rétrécit dans la direction de montage (18) le long d'une section en cône creux sur le diamètre intérieur (D) d'un manchon de rotor (19) prévu du rotor (1), de sorte que le manchon de montage (13) comprime les segments de tôle de rotor (8, 11, 14) avec les aimants permanents (7, 16) pour obtenir un paquet de tôles (2).

3. Procédé selon la revendication 2,
**caractérisé par**
- l'application par pression côté frontal au moins d'un disque frontal (4) sur le paquet de tôles (2),
- l'introduction par pression du paquet de tôles (2) dans le manchon de rotor (19), de préférence au moyen d'un poinçon (27), et
- le guidage d'un manchon de palier (20) à travers le disque frontal (4) et le paquet de tôles (2).

4. Procédé selon la revendication 3,
**caractérisé en ce que**
le paquet de tôles (2) est introduit par pression dans le manchon de rotor (19) par le disque frontal (4) vers l'avant le long d'un chanfrein d'introduction (28) du disque frontal (4).

5. Procédé selon la revendication 3 ou 4,
**caractérisé par**
- le façonnage plastique, en particulier l'incrustation, d'au moins un renfoncement (21) dans le manchon de rotor (19) pendant ou après l'introduction par pression de telle manière que le renfoncement (21) relie par complémentarité de forme le manchon de rotor (19) au paquet de tôles (2), de préférence côté frontal à l'un des aimants permanents (7, 16).

6. Procédé selon l'une quelconque des revendications 3 à 5,
**caractérisé par**
- l'assemblage final du paquet de tôles (2), du disque frontal (4) et du manchon de palier (20) au moyen d'un cordon de soudage (22), en particulier d'un cordon de soudage au laser.
